# FASCICULE DE BREVET EUROPEEN

(11) **EP 2 623 799 B1**
(45) Date de publication et mention de la délivrance du brevet: **15.07.2015**
(21) Numéro de dépôt: 13305038.5
(22) Date de dépôt: 15.01.2013
(51) Int. Cl.: F16B 39/30

(54) **Elément d'assemblage pour solidariser deux pièces entre-elles et ensemble comprenant deux pièces assemblées par un tel élément**
Montageelement zum festen Verbinden von zwei Teilen und Einheit, die die beiden mit Hilfe dieses Elements zusammengebauten Teile umfasst.
Connecting element for securing two parts together and assembly including two parts assembled by such an element

(30) Priorité: 31.01.2012 FR 1200290
(43) Date de publication de la demande: 07.08.2013
(73) Titulaire: Legrand France, 87000 Limoges (FR); Legrand SNC, 87000 Limoges (FR)
(72) Inventeur: Loizel, Jérôme, 76970 GREMONVILLE (FR)
(74) Mandataire: Orsini, Fabienne

(56) Documents cités:
- JP-A- 2010 107 029
- US-B2- 6 979 163

## Description

La présente invention concerne de manière générale, l'assemblage de deux pièces à l'aide d'un dispositif d'assemblage fileté.

Elle concerne plus particulièrement un élément d'assemblage de deux pièces, comprenant une tête de manoeuvre qui présente une surface d'appui destinée à prendre appui sur la première pièce à assembler et un fût qui s'étend à partir de la surface d'appui selon un axe longitudinal et qui est pourvu d'un filet s'enroulant autour de l'axe longitudinal.

L'invention concerne également un ensemble comprenant une première pièce et une deuxième pièces assemblées au moyen d'au moins un élément d'assemblage tel que précité.

L'invention trouve une application particulièrement avantageuse dans la réalisation d'un élément permettant le montage rapide d'un plastron, d'une façade ou d'un couvercle sur un support d'un coffret électrique.

Toutefois, l'invention peut être également appliquée à l'assemblage de tout type de pièces.

### ARRIERE-PLAN TECHNOLOGIQUE

On connaît déjà une boîte électrique dont le couvercle est fixé sur le corps de la boîte à l'aide d'éléments d'assemblage quart de tour tels que précités, logés de manière imperdable dans des logements prévus aux quatre coins du couvercle.

Ici, chaque élément d'assemblage quart de tour comporte sur son fût, juste en dessous de sa tête de manoeuvre, un nervure annulaire qui, lorsque l'élément d'assemblage est engagé au travers du trou de passage du fond du logement prévu au coin du couvercle, se positionne sous la face arrière du logement, autour dudit trou de façon à retenir ledit élément d'assemblage dans le logement du couvercle.

En outre, le logement prévu au coin du corps de la boîte électrique pour accueillir le fût de l'élément d'assemblage quart de tour, comporte intérieurement un filetage destiné à coopérer avec le pied de l'élément d'assemblage pour le verrouillage et le déverrouillage du couvercle.

On connaît également des documents US6979163 et JP2010107029, des vis d'assemblage agencées de manière à renforcer leur fixation dans le logement taraudé de la pièce qui les accueille.

Chacune de ces vis d'assemblage comporte à cet effet un fût pourvu d'un filet hélicoïdal interrompu régulièrement par des encoches présentant des surfaces d'appui qui s'étendent toutes parallèlement à l'axe autour duquel s'enroule le filet de la vis.

### OBJET DE L'INVENTION

Par rapport à l'état de la technique précité, il est proposé selon l'invention un élément d'assemblage dont le filet est adapté à coopérer simplement avec le bord lisse d'un trou d'une pièce à assembler et qui est agencé pour se verrouiller sur ce bord de manière à éviter tout dévissage intempestif ultérieur de l'élément d'assemblage lors des diverses manipulations des pièces assemblées à l'aide de cet élément.

Plus particulièrement, on propose un élément d'assemblage de deux pièces selon la revendication 1.

D'autres caractéristiques non limitatives et avantageuses de l'élément d'assemblage conforme à l'invention sont énoncées dans les revendications 2 à 11.

L'invention propose également un ensemble comprenant une première et deuxième pièces assemblées au moyen d'au moins un élément d'assemblage tel que précité, la première pièce comprenant un logement d'accueil de la tête de manoeuvre dudit élément d'assemblage, dont le fond est percé d'une ouverture oblongue pour le passage du fût, et la deuxième pièce comportant en correspondance un logement d'accueil du fût dudit élément d'assemblage, dont le fond est percé d'une ouverture oblongue dont le bord périphérique lisse coopère avec le filet dudit fût.

Selon une caractéristique avantageuse de l'ensemble conforme à l'invention, le logement d'accueil de la première pièce est délimité par une paroi cylindrique qui comporte une encoche qui débouche sur le bord périphérique de l'ouverture oblongue, cette encoche logeant une languette élastique adaptée à coopérer avec des aménagements prévus sur la tête de manoeuvre de l'élément d'assemblage pour indexer les positions de desserrage et de serrage de ce dernier.

Selon une autre caractéristique avantageuse de l'ensemble conforme à l'invention, le logement d'accueil de la première pièce est délimité par une paroi cylindrique qui porte en saillie un plot formant une butée pour une face d'aménagements prévus sur la tête de manoeuvre de l'élément d'assemblage pour indexer les positions de desserrage et de serrage de ce dernier.

Selon une autre caractéristique avantageuse de l'ensemble conforme à l'invention, la première pièce est un plastron et la deuxième pièce est un support d'un coffret électrique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 à 4 sont des vues schématiques en perspective d'un mode de réalisation préférentiel d'un élément d'assemblage selon l'invention, orienté selon quatre orientations différentes ;
- la figure 5 est une vue schématique partielle de dessus d'une première pièce d'un ensemble selon l'invention ;
- la figure 6 est une vue schématique en perspective de dessous de la pièce de la figure 5 ;
- la figure 7 est une vue schématique en perspective d'une variante de réalisation de l'élément d'assemblage conforme à l'invention ;
- la figure 8 est une vue schématique partielle en perspective de dessus d'une deuxième pièce d'un ensemble selon l'invention ;
- les figures 9 et 10 sont des vues schématiques en perspective de trois quart et de dessous, de la première étape d'assemblage de la première pièce de la figure 5 avec la deuxième pièce de la figure 8 à l'aide de l'élément d'assemblage de la figure 1 ;
- les figures 11 et 12 sont des vues schématiques en perspective de trois quart et de dessous, de la deuxième étape d'assemblage de la première pièce de la figure 5 avec la deuxième pièce de la figure 8 à l'aide de l'élément d'assemblage de la figure 1 ;
- les figures 13 et 14 sont des vues schématiques en perspective de trois quart et de dessous, de l'étape finale d'assemblage de la première pièce de la figure 5 avec la deuxième pièce de la figure 8 à l'aide de l'élément d'assemblage de la figure 1 ;
- la figure 15 est une vue en coupe partielle selon le plan A-A de la figure 13; et
- la figure 16 est une vue en loupe de la zone C de la figure 15.

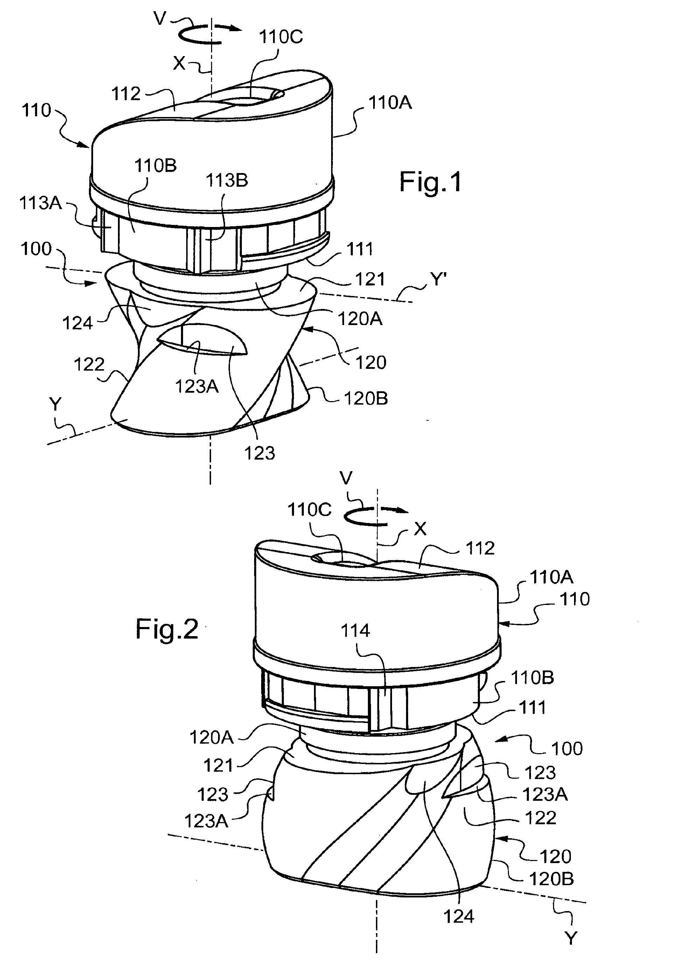

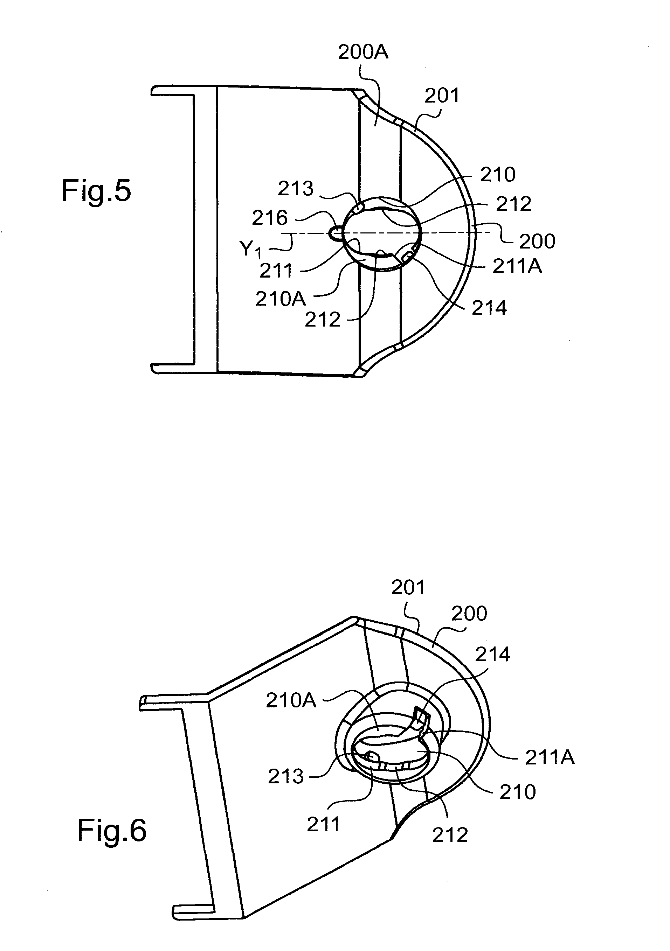

Sur les figures 1 à 4 on a représenté un mode de réalisation préférentiel d'un élément d'assemblage 100 de deux pièces 200, 300 représentées partiellement plus particulièrement sur les figures 5, 6 et 8.

Préférentiellement, la première pièce 200 à assembler est ici un plastron de fermeture de l'ouverture avant d'un coffret électrique (non représenté dans son ensemble) et la deuxième pièce 300 est un support dudit coffret électrique.

L'élément d'assemblage 100 est avantageusement formé d'une seule pièce par moulage d'une matière plastique rigide ou d'une matière métallique telle que du zamak.

Il comprend une tête de manoeuvre 110 et un fût 120 qui s'étend à partir de la tête de manoeuvre 110 selon un axe longitudinal X.

La tête de manoeuvre 110 présente un gabarit cylindrique de révolution autour de l'axe longitudinal X, avec une partie supérieure 110A comportant une surface de manoeuvre 112 tournée à l'opposé du fût 120 et une partie inférieure 110B présentant une surface d'appui 111 tournée vers le fût 120 et destinée à prendre appui sur la première pièce 200 à assembler.

La surface de manoeuvre 112 est ici une surface cylindrique légèrement bombée. Elle s'étend en oblique par rapport à l'axe longitudinal X. Classiquement, cette surface de manoeuvre 112 est pourvue d'une fente 110C destinée à recevoir la pointe d'un outil pour le serrage et le desserrage de l'élément d'assemblage 100 comme cela sera expliqué plus en détail dans la suite du texte.

La surface d'appui 111 de la tête de manoeuvre 110 est une surface circulaire centrée sur l'axe longitudinal X. Elle s'étend perpendiculairement à l'axe longitudinal X. Le fût 120 s'étend à partir de cette surface d'appui 111 dans une direction opposée à la surface de manoeuvre 112.

Le fût 120 s'inscrit dans le gabarit de la tête de manoeuvre 110. Il comporte deux parties, à savoir, une partie supérieure 120A attachée à la surface d'appui 111 de la tête de manoeuvre 110 et une partie inférieure 120B dont la surface externe est pourvue d'un filet 122 s'enroulant autour de l'axe longitudinal X.

Selon le mode de réalisation préférentiel de l'élément d'assemblage 100 représenté sur les figures 1 à 4, le filet 122 s'enroule autour de l'axe longitudinal X de sorte que l'élément d'assemblage 100 est une vis quart de tour.

La partie supérieure 120A du fût 120 comporte une forme cylindrique de révolution autour de l'axe longitudinal X. Elle présente un diamètre inférieur au diamètre de la surface d'appui 111 de la tête de manoeuvre 110 de sorte que ladite surface d'appui 111 surplombe la partie inférieure 120B du fût 120.

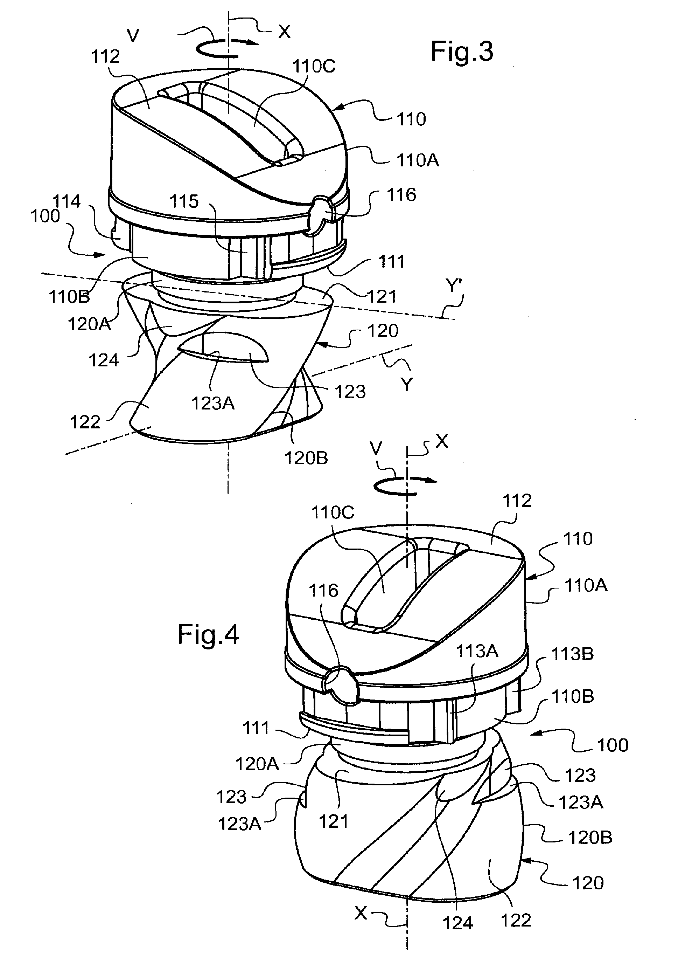

La partie inférieure 120B du fût 120 comporte une extrémité attachée à la partie supérieure 120A et une extrémité libre opposée. Cette partie inférieure 120B, inscrite dans le gabarit de la tête de manoeuvre 110, présente une section oblongue. L'extrémité libre de la partie inférieure 120B comporte une section oblongue d'engagement dont la longueur s'étend suivant un axe longitudinal Y, transversal à l'axe longitudinal X. Cet axe longitudinal Y forme dans un plan parallèle un angle de 90 degrés avec l'axe Y' selon lequel s'étend la longueur de la section oblongue 121 de l'extrémité de la partie inférieure 120B attachée à la partie supérieure 120A (voir figures 1 et 3).

La section oblongue 121 de l'extrémité attachée de la partie inférieure 120B du fût 120 s'étend en regard de la surface d'appui 111 de la tête de manoeuvre 110. Cette section oblongue 121 et ladite surface d'appui 111 délimitent entre elles une rainure circulaire dont le fond est formé par la surface externe de la partie supérieure 120A du fût 120. Cette rainure circulaire est destinée à accueillir une partie de la première pièce 200 lorsque l'élément d'assemblage 100 est monté sur cette pièce de manière à rendre imperdable le montage de l'élément d'assemblage 100 sur la première pièce 200.

Selon une caractéristique particulièrement avantageuse de l'élément d'assemblage 100, le filet 122 du fût 120 comporte une encoche 123 qui présente une surface de blocage 123A destinée à prendre appui sur la deuxième pièce 300 à assembler. Cette surface de blocage 123A est tournée vers la tête de manoeuvre 110 et s'étend parallèlement à ladite surface d'appui 111.

Selon le mode de réalisation représenté sur les figures 1 à 4, le filet 122 du fût 120 comporte deux encoches 123 identiques disposées de manière symétrique par rapport à l'axe longitudinal X du fût 120.

Chaque encoche 123 présente une section transversale en équerre et est réalisée dans une zone du filet 122 située à proximité de la tête de manoeuvre 110.

Plus particulièrement, les encoches 123 sont placées en bout de filet 122, à proximité de la section oblongue 121 de la partie inférieure 120B du fût 120 qui est adaptée à enserrer la première pièce 200, de sorte que ces encoches 123 sont adaptées à s'engager sur une partie de la deuxième pièce 300 à la fin du vissage de l'élément d'assemblage 100 pour serrer l'une contre l'autre les deux pièces 200, 300.

Par ailleurs, l'élément d'assemblage 100 comporte des moyens d'indexation aptes à repérer ses positions de desserrage et de serrage.

Ici, la partie inférieure 110B de la tête de manoeuvre 110 comprend une surface cylindrique externe, dont l'axe est l'axe longitudinal X, située en retrait par rapport au gabarit de la tête de manoeuvre 110. Cette surface cylindrique externe est pourvue d'aménagements, positionnés angulairement de manière déterminée de sorte qu'ils sont adaptés chacun à coopérer avec une contrepartie de la première pièce 200 pour indexer lesdites positions de desserrage et de serrage dudit élément d'assemblage 100.

Préférentiellement, ces aménagements comprennent deux nervures 113A, 113B en saillie s'étendant parallèlement à l'axe longitudinal X du fût 120 et espacées angulairement l'une de l'autre d'un angle déterminé qui dépend de l'angle de serrage de l'élément d'assemblage. Ici, l'angle de serrage est égal à 90 degrés puisque l'élément d'assemblage est une vis quart de tour et les deux nervures 113A, 133B sont alors espacées d'un angle de 90 degrés (voir figure 4). L'une 113A des nervures marque la position de desserrage et l'autre nervure 113B marque la position de serrage de l'élément d'assemblage 100.

En outre, comme le montre plus particulièrement la figure 3, ladite surface cylindrique externe de la partie inférieure 110B de la tête de manoeuvre 110 comprend des encoches 114, 115 disposées de manière diamétralement opposée aux nervures 113A, 113B repérant les positions de desserrage et de serrage de l'élément d'assemblage 100.

Ainsi, selon l'exemple représenté sur les figures, la tête de manoeuvre 110 comporte, d'une part, un couple d'une nervure 113A et d'une encoche 114 diamétralement opposées, destinées à coopérer avec des contreparties de la première pièce 200 pour indexer la position de desserrage de l'élément d'assemblage 100, et, d'autre part, un autre couple d'une nervure 113B et d'une encoche 115 diamétralement opposées, destinées à coopérer avec lesdites contreparties de la première pièce 200 pour indexer la position de serrage de l'élément d'assemblage 100.

Par ailleurs, avantageusement, l'élément d'assemblage 100 représenté sur les figures 1 à 4, comporte des moyens d'encliquetage pour son montage imperdable sur la première pièce 200. Ces moyens d'encliquetage comprennent la rainure circulaire de l'élément d'assemblage 100 ainsi que deux bossages 124 disposés de manière symétrique par rapport à l'axe longitudinal X, dans le creux du filet 122, à l'extrémité du filet 122 située du côté de la tête de manoeuvre 110. Chaque bossage 124 comporte une section en forme de portion de cercle qui débouche sur la section oblongue 121 de la partie inférieure 120B du fût 120 attachée à la partie supérieure 120A, si bien que cette section oblongue 121 présente en son centre un élargissement dû aux bossages 124.

Sur les figures 5 et 6, on a représenté une portion d'un plastron d'un coffret électrique, formant la première pièce 200 à assembler d'un ensemble comprenant deux pièces à assembler au moyen de l'élément d'assemblage 100 précédemment décrit.

Cette première pièce 200 comporte une paroi 200A pourvue en creux d'un logement d'accueil adapté à recevoir la tête de manoeuvre 110 de l'élément d'assemblage 100.

Ce logement d'accueil est délimité par une paroi 210 cylindrique de révolution. Il présente un diamètre égal au jeu près au diamètre du gabarit cylindrique de la tête de manoeuvre 110. Il présente en outre une profondeur égale au jeu près à la hauteur de la tête de manoeuvre 110 de l'élément d'assemblage 100.

Le logement d'accueil comporte un fond 210A percé d'une ouverture oblongue pour le passage du fût 120 de l'élément d'assemblage 100. Cette ouverture oblongue s'étend en longueur suivant un axe longitudinal Y1. L'ouverture oblongue présente une section qui est égale au jeu près à la section oblongue du fût 120 de l'élément d'assemblage 100. Le bord périphérique 211 de l'ouverture oblongue est globalement lisse. Ce bord périphérique 211 comporte sur ses deux grands côtés droits, face à face, des élargissements arrondis 212 pour faciliter le passage au travers de l'ouverture oblongue des bossages 124 du fût 120 de l'élément d'assemblage 100 et, ainsi, l'encliquetage dudit élément d'assemblage 100 sur la première pièce 200.

Selon l'exemple représenté, la paroi 210 du logement d'accueil comporte une encoche 211A qui débouche sur le bord périphérique 211 de l'ouverture oblongue. Cette encoche 211A loge une languette 214 élastique adaptée à coopérer avec les aménagements prévus sur la tête de manoeuvre 110 de l'élément d'assemblage 100 pour indexer les positions de desserrage et de serrage de ce dernier.

Ici, la languette 214 coopère avec les nervures 113A, 113B de la tête de manoeuvre 110 de l'élément d'assemblage 100 pour marquer lesdites positions de desserrage et de serrage de l'élément d'assemblage 100.

Au surplus, avantageusement, la paroi 210 du logement d'accueil porte en saillie un plot 213 diamétralement opposé à la languette 214. Ce plot 213 forme une butée pour une face de chaque encoche 114, 115 prévue sur la tête de manoeuvre 110 de l'élément d'assemblage 100 pour indexer chaque position de desserrage et de serrage de ce dernier.

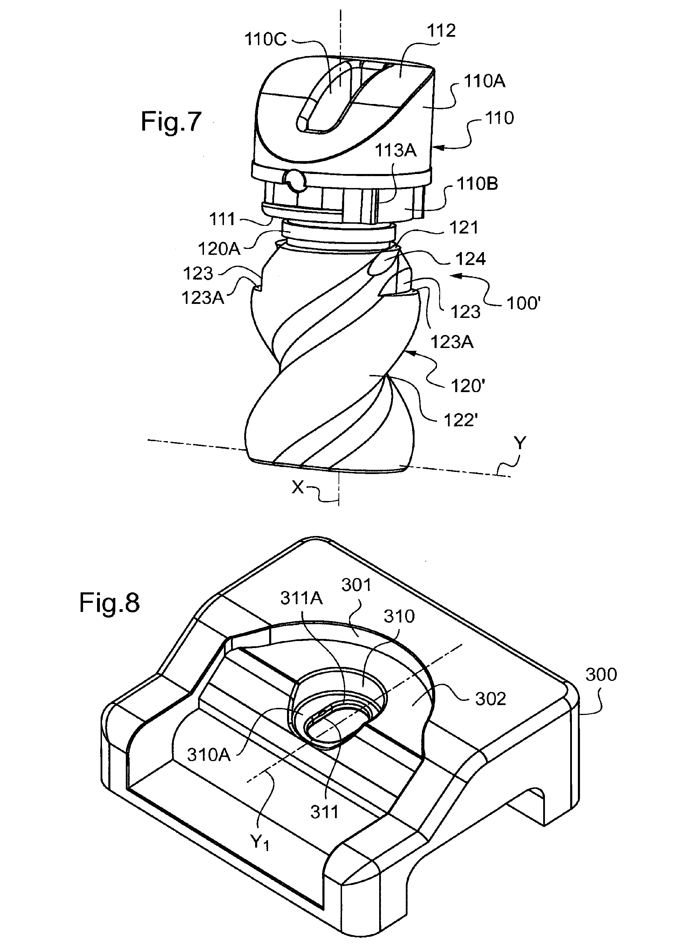

Sur la figure 8, on a représenté une portion d'un support d'un coffret électrique, formant la deuxième pièce 300 à assembler à la première pièce 200 au moyen de l'élément d'assemblage 100 précédemment décrit.

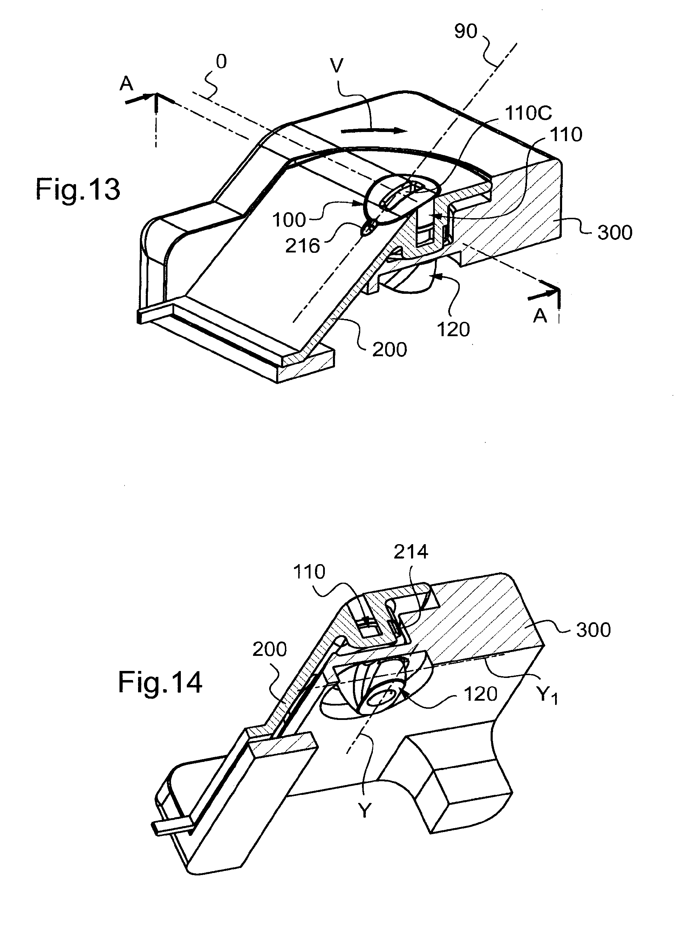

Cette deuxième pièce 300 comporte une paroi avec un renfoncement 302 dont la forme et le contour 301 sont complémentaires de la forme et du contour 201 de la première pièce 200 de sorte que les deux pièces 200, 300 sont adaptées à s'emboîter l'une dans l'autre (voir figure 13).

La deuxième pièce 300 comprend également en creux un logement d'accueil 310 adapté à recevoir le fût 120 de l'élément d'assemblage 100 qui a traversé l'ouverture oblongue du logement d'accueil de la première pièce 200. Le fond 310A de ce logement d'accueil 310 est percé d'une ouverture oblongue d'axe longitudinal Y1. Cette ouverture oblongue présente une section qui est égale au jeu près à la section oblongue du fût 120 de l'élément d'assemblage 100. Elle présente un bord périphérique 311 lisse qui est adapté à coopérer avec le filet 122 dudit fût 120. Ce bord périphérique 311 comporte une partie chanfreinée 311A qui forme à l'entrée de l'ouverture oblongue une embouchure évasée.

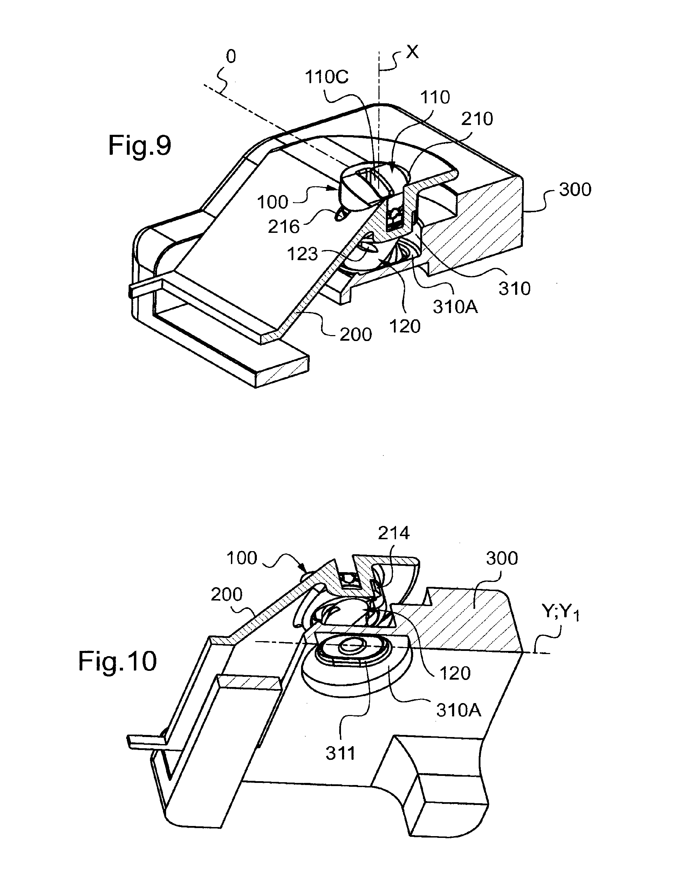

L'assemblage des deux pièces 200 et 300 à l'aide de l'élément d'assemblage 100 va maintenant être décrit en référence aux figures 9 à 16.

Préalablement, l'élément d'assemblage 100 est rapporté sur la première pièce 200.

Pour cela, l'élément d'assemblage 100, orienté comme sur la figure 2, est introduit dans le logement d'accueil de la première pièce 200 au travers de l'ouverture oblongue. Il est pivoté d'un quart de tour suivant la flèche V pour enfoncer son fût 120 au travers de l'ouverture oblongue jusqu'à ce que les bossages 124 prévus sur le fût 120 passent sous le fond 210A du logement d'accueil et qu'une partie de la première pièce 200 s'étendant autour du bord périphérique 211 de l'ouverture oblongue soit engagée dans la rainure circulaire de l'élément d'assemblage 100. A la fin de ce quart de tour, d'une part, la première nervure 113A prévue sur la partie inférieure 110B de la tête de manoeuvre 110 de l'élément d'assemblage 100 provoque un « click » en déformant élastiquement la languette 214 prévue dans la paroi 210 du logement d'accueil de la première pièce 200, et, d'autre part, une face de l'encoche 114 prévue sur la partie inférieure 110B de la tête de manoeuvre 110 de l'élément d'assemblage 100 vient en butée contre le plot 213 prévu sur la paroi 210 du logement d'accueil de la première pièce 200. L'élément d'assemblage 100 est alors orienté comme sur la figure 3. Cette position de l'élément d'assemblage 100, appelée position de desserrage, est repérée par le « click » et la butée explicités ci-dessus.

Comme le montrent les figures 9 et 10, la première pièce 200 équipée de l'élément d'assemblage 100 positionné en position de desserrage, dans laquelle la fente 110C de sa tête de manoeuvre 110 s'étend suivant l'axe 0, est approchée de la deuxième pièce 300 pour introduire le fût 120 dans l'ouverture oblongue du logement d'accueil 310. L'axe longitudinal Y de la section oblongue d'engagement du fût 120 de l'élément d'assemblage 100 est alors orienté selon l'axe longitudinal Y1 de cette ouverture oblongue.

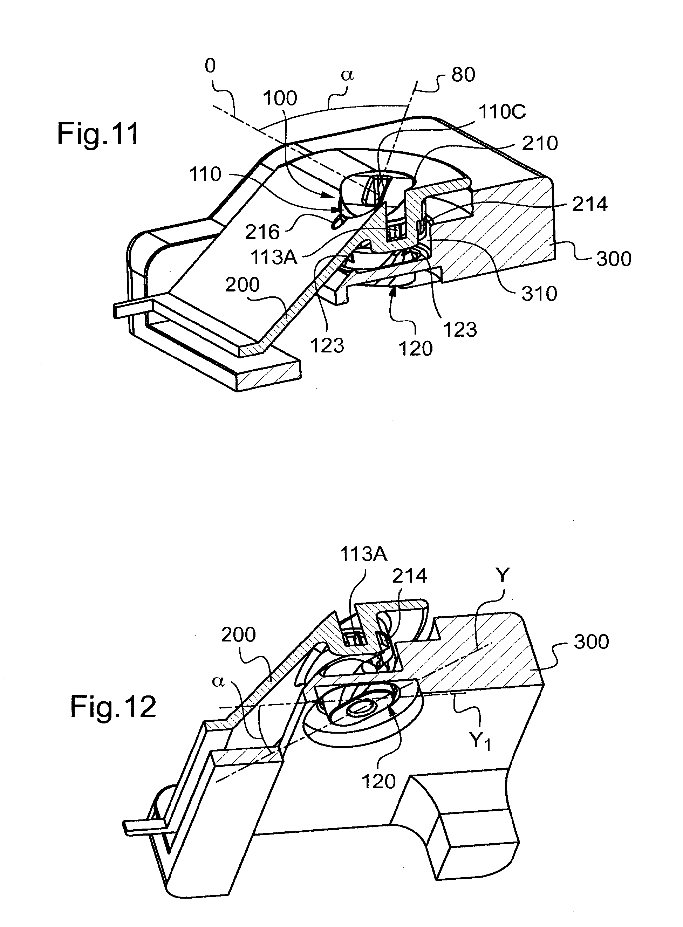

Sans utiliser d'outil de vissage, en appuyant simplement sur la première pièce 200, l'installateur engage le fût 120 de l'élément d'assemblage 100 au travers de l'ouverture oblongue de la deuxième pièce 300. Le filet 122 du fût 120 de l'élément d'assemblage 100 coopère alors avec le bord périphérique 311 de l'ouverture oblongue de la deuxième pièce 300 ce qui provoque la rotation suivant la flèche V d'un angle α égal à environ 80 degrés de l'élément d'assemblage 100. La fente 110C de sa tête de manoeuvre 110 est alors orientée selon l'axe 80 comme cela est représenté sur la figure 11.

Dans cette position intermédiaire, comme le montre la figure 12, l'axe longitudinal Y de la section oblongue d'engagement du fût 120 de l'élément d'assemblage 100 forme alors un angle d'environ 80 degrés avec l'axe longitudinal Y1 de l'ouverture oblongue du logement d'accueil 310 de la deuxième pièce 300.

L'installateur introduit ensuite la pointe d'un outil dans la fente 110C de la tête de manoeuvre 110 de l'élément d'assemblage 100 pour finir le vissage de l'élément d'assemblage 100 suivant la flèche V et positionner cet élément en position de serrage, comme sur les figures 4 et 13, orienté à 90 degrés par rapport à sa position de desserrage représentée sur les figures 3 et 9.

La fente 110C de sa tête de manoeuvre 110 est alors orientée selon l'axe 90 comme cela est représenté sur la figure 13.

Un trou 116 prévu dans la tête de manoeuvre 110 de l'élément d'assemblage 100 est placé en regard d'une encoche 216 correspondante prévue dans la première pièce 200. De manière connue en soi, l'installateur peut introduire un fil au travers de la tête de manoeuvre 110 de l'élément d'assemblage 100, via le trou 116 et la fente 110C, pour former une boucle qu'il scelle afin de rendre inviolable l'assemblage.

Dans cette position de serrage, comme le montre la figure 14, l'axe longitudinal Y de la section oblongue d'engagement du fût 120 de l'élément d'assemblage 100 forme alors un angle de 90 degrés avec l'axe longitudinal Y1 de l'ouverture oblongue du logement d'accueil 310 de la deuxième pièce 300.

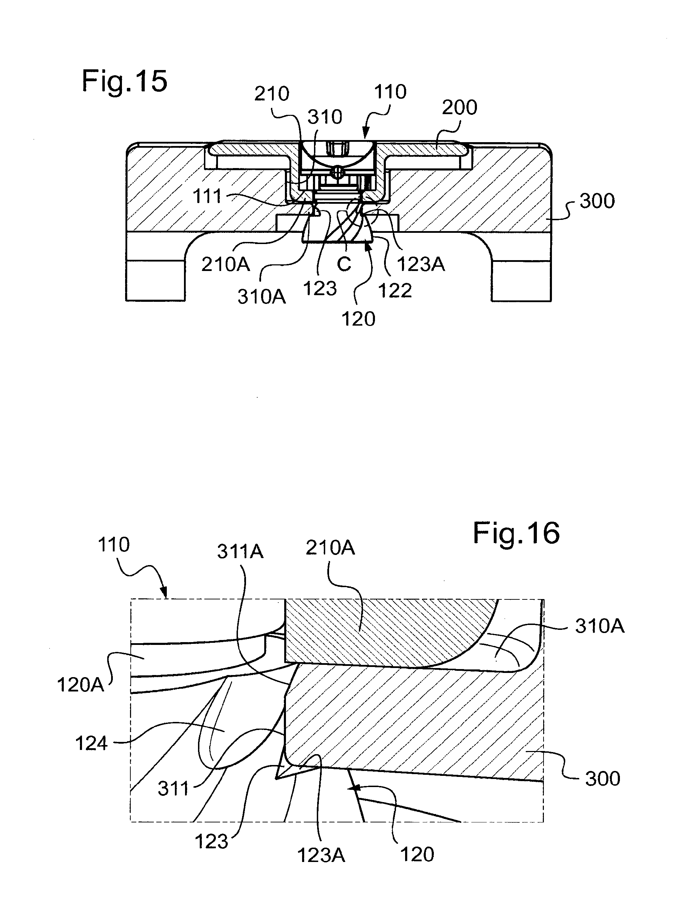

Comme le montrent les figures 15 et 16, en fin de vissage, le bord périphérique 311 lisse de l'ouverture oblongue de la deuxième pièce 300 s'engage dans les encoches 123 prévues dans le filet 122 du fût 120 de l'élément d'assemblage 100. Les surfaces de blocage 123A de ces encoches 123 prennent alors appui sous le fond 310A du logement d'accueil de la deuxième pièce 300. Avantageusement, le fond 210A du logement d'accueil de la première pièce 200 et le fond 310A du logement d'accueil de la deuxième pièce 300 sont serrés l'un contre l'autre en étant pris en sandwich entre la surface d'appui 111 de la partie inférieure 110B de la tête de manoeuvre 110 et les surfaces de blocage 123A des encoches 123 du fût 120 de l'élément d'assemblage 100. Cette prise en sandwich assure le blocage de l'élément d'assemblage en position de serrage.

Par ailleurs à la fin du vissage, d'une part, la deuxième nervure 113B prévue sur la partie inférieure 110B de la tête de manoeuvre 110 de l'élément d'assemblage 100 provoque un « click » en déformant élastiquement la languette 214 prévue dans la paroi 210 du logement d'accueil de la première pièce 200, et, d'autre part, une face de l'encoche 115 prévue sur la partie inférieure 110B de la tête de manoeuvre 110 de l'élément d'assemblage 100 vient en butée contre le plot 213 prévu sur la paroi 210 du logement d'accueil de la première pièce 200. Cette position de serrage de l'élément d'assemblage 100 est repérée par le « click » et la butée explicités ci-dessus.

Pour desserrer l'élément d'assemblage 100, l'installateur fait sauter le scellage et introduit la pointe d'un outil dans la fente 110C de la tête de manoeuvre 110 pour faire pivoter l'élément d'assemblage d'un angle de 90 degrés dans le sens inverse de la flèche V. Avantageusement, le desserrage de l'élément d'assemblage 100 provoque l'écartement des deux pièces 200, 300 l'une de l'autre.

La présente invention n'est nullement limitée au mode de réalisation préférentiel décrit mais l'homme du métier saura y apporter toute variante conforme à son esprit.

En particulier, selon une variante de réalisation de l'élément d'assemblage 100' représentée sur la figure 7, on pourra prévoir que le filet 122' du fût 120' s'enroule autour de l'axe longitudinal X sur environ un demi-tour. Les nervures 113A, 113B prévues sur la surface cylindrique externe de la partie inférieure 110B de la tête de manoeuvre 110 pour marquer les positions de desserrage et de serrage de l'élément d'assemblage, sont alors espacées d'un angle d'environ 180 degrés.

## Revendications

1. Elément d'assemblage (100) de deux pièces (200, 300), comprenant une tête de manoeuvre (110) qui présente une surface d'appui (111) destinée à prendre appui sur la première pièce (200) à assembler et un fût (120) qui s'étend à partir de la surface d'appui (111) selon un axe longitudinal (X) et qui est pourvu d'un filet (122) s'enroulant autour de l'axe longitudinal (X), **caractérisé en ce que** le filet (122) comporte une encoche (123) qui présente une surface de blocage (123A), destinée à prendre appui sur la deuxième pièce (300) à assembler, tournée vers la tête de manoeuvre et s'étendant parallèlement à ladite surface d'appui (111).

2. Elément d'assemblage (100) selon la revendication 1, dans lequel ladite encoche (123) présente une section transversale en équerre.

3. Elément d'assemblage (100) selon l'une des revendications 1 et 2, dans lequel ladite encoche (123) est réalisée dans une zone du filet (122) située à proximité de la tête de manoeuvre (110).

4. Elément d'assemblage (100) selon l'une des revendications précédentes, dans lequel le filet (122) comporte deux encoches (123) identiques disposées de manière symétrique par rapport à l'axe longitudinal (X) du fût (120).

5. Elément d'assemblage (100) selon l'une des revendications précédentes, qui comporte des moyens d'indexation aptes à repérer des positions de desserrage et de serrage dudit élément d'assemblage.

6. Elément d'assemblage (100) selon la revendication précédente, dans lequel la tête de manoeuvre (110) comprend une surface cylindrique externe dont l'axe est l'axe longitudinal du fût, cette surface cylindrique externe étant pourvue d'aménagements (113A, 113B, 114, 115), positionnés angulairement de manière déterminée de sorte qu'ils sont adaptés chacun à coopérer avec une contrepartie de la première pièce (200) pour indexer lesdites positions de desserrage et de serrage dudit élément d'assemblage.

7. Elément d'assemblage (100) selon la revendication précédente, dans lequel lesdits aménagements comprennent deux nervures (113A, 113B) en saillie s'étendant parallèlement à l'axe longitudinal (X) du fût (120) et espacées angulairement l'une de l'autre d'un angle déterminé qui dépend de l'angle de serrage de l'élément de serrage.

8. Elément d'assemblage (100) selon la revendication précédente, dans lequel ladite surface cylindrique externe de la tête de manoeuvre comprend des encoches (114, 115) disposées de manière diamétralement opposée aux nervures (113A, 113B) repérant les positions de desserrage et de serrage de l'élément d'assemblage.

9. Elément d'assemblage (100) selon l'une des revendications précédentes, dans lequel le filet (122) s'enroule autour de l'axe longitudinal du fût de sorte que l'élément d'assemblage (100) est une vis quart de tour.

10. Elément d'assemblage (100) selon l'une des revendications précédentes, qui comporte des moyens d'encliquetage pour son montage sur la première pièce.

11. Elément d'assemblage (100) selon la revendication précédente, dans lequel lesdits moyens d'encliquetage comprennent un bossage (124) faisant saillie de la surface externe du fût.

12. Ensemble comprenant une première et deuxième pièces (200, 300) assemblées au moyen d'au moins un élément d'assemblage (100) selon l'une des revendications précédentes, la première pièce (200) comprenant un logement d'accueil de la tête de manoeuvre (110) dudit élément d'assemblage (100), dont le fond (210A) est percé d'une ouverture oblongue pour le passage du fût (120), et la deuxième pièce (300) comportant en correspondance un logement d'accueil du fût (120) dudit élément d'assemblage (100), dont le fond (310A) est percé d'une ouverture oblongue dont le bord périphérique (311) lisse coopère avec le filet (122) dudit fût (120).

13. Ensemble selon la revendication précédente, dans lequel le logement d'accueil de la première pièce (200) est délimité par une paroi (210) cylindrique qui comporte une encoche (211A) qui débouche sur le bord périphérique (211) de l'ouverture oblongue, cette encoche (211A) logeant une languette (214) élastique adaptée à coopérer avec des aménagements prévus sur la tête de manoeuvre (110) de l'élément d'assemblage (100) pour indexer les positions de desserrage et de serrage de ce dernier.

14. Ensemble selon l'une des revendications 12 et 13, dans lequel le logement d'accueil de la première pièce (200) est délimité par une paroi (210) cylindrique qui porte en saillie un plot (213) formant une butée pour une face d'aménagements prévus sur la tête de manoeuvre de l'élément d'assemblage pour indexer les positions de desserrage et de serrage de ce dernier.

15. Ensemble selon l'une des revendications 12 à 14, dans lequel la première pièce (200) est un plastron et la deuxième pièce (300) est un support d'un coffret électrique.

## Patentansprüche

1. Verbindungselement (100) für zwei Teile (200, 300), das einen Betätigungskopf (110) umfasst, der eine Auflagefläche (111) zum Abstützen auf dem ersten zusammenzufügenden Teil (200) aufweist und eine Hülse (120), die sich ab der Auflagefläche (111) entlang einer Längsachse (X) erstreckt und mit einem Gewinde (122) versehen ist, welches sich um die Längsachse (X) dreht, **dadurch gekennzeichnet, dass** das Gewinde (122) eine Nut (123) mit einer Spannfläche (123A) aufweist, die auf dem zweiten zusammenzufügenden Teil (300) zum Aufliegen kommt, die Richtung Betätigungskopf orientiert ist und sich parallel zur Auflagefläche (111) erstreckt.

2. Verbindungselement (100) nach Anspruch 1, bei dem die Nut (123) einen abgewinkelten Querschnitt aufweist.

3. Verbindungselement (100) nach einem der Ansprüche 1 und 2, bei dem die Nut (123) in einem Bereich des Gewindes (122) realisiert ist, der in der Nähe des Betätigungskopfes (110) liegt.

4. Verbindungselement (100) nach einem der vorausgehenden Ansprüche, bei dem das Gewinde (122) zwei identische Nuten (123) umfasst, die in Bezug zur Längsachse (X) der Hülse (120) symmetrisch angeordnet sind.

5. Verbindungselement (100) nach einem der vorausgehenden Ansprüche, das Indexierungsmittel umfasst, die Positionen zum Lösen und Spannen des Verbindungselements indizieren können.

6. Verbindungselement (100) nach vorausgehendem Anspruch, bei dem der Betätigungskopf (110) außen eine Zylinderfläche umfasst, deren Achse die Längsachse der Hülse ist, wobei diese äußere Zylinderfläche mit Gestaltungen (113A, 113B, 114, 115) versehen ist, die bewusst derart im Winkel angeordnet sind, dass sie sich jeweils dazu eignen, mit einem Gegenstück des ersten Teils (200) zusammenzuwirken, um die Positionen zum Lösen und Spannen des Verbindungselements zu indizieren.

7. Verbindungselement (100) nach vorausgehendem Anspruch, bei dem die Gestaltungen zwei hervorstehende Rippen (113A, 113B) umfassen, die sich parallel zur Längsachse (X) der Hülse (120) erstrecken und winkelmäßig um einen bestimmten Winkel voneinander entfernt sind, der vom Spannwinkel des Spannelements abhängt.

8. Verbindungselement (100) nach vorausgehendem Anspruch, bei dem die äußere Zylinderfläche des Betätigungskopfes Nuten (114, 115) umfasst, die gegenüberliegend zu den Rippen (113A, 113B) angebracht sind und die Positionen für Lösen und Spannen des Verbindungselements markieren.

9. Verbindungselement (100) nach einem der vorausgehenden Ansprüche, bei dem sich das Gewinde (122) derart um die Längsachse der Hülse dreht, dass das Verbindungselement (100) eine Vierteldrehschraube ist.

10. Verbindungselement (100) nach einem der vorausgehenden Ansprüche, das zu seinem Montieren auf das erste Teil Einrastmittel umfasst.

11. Verbindungselement (100) nach vorausgehendem Anspruch, bei dem diese Einrastmittel einen Befestigungsdorn (124) umfassen, der von der Außenseite der Hülse weg steht.

12. Einheit, ein erstes und zweites Teil (200, 300) umfassend, die mittels mindestens einem Verbindungselement (100) nach einem der vorausgehenden Ansprüche verbunden sind, wobei das erste Teil (200) eine Aufnahme für den Betätigungskopf (110) des Verbindungselements (100) umfasst, deren Boden (210A) von einem Langloch für den Durchgang der Hülse (120) durchdrungen ist, und wobei das zweite Teil (300) entsprechend eine Aufnahme für die Hülse (120) des Verbindungselements (100) umfasst, deren Boden (310A) von einem Langloch durchdrungen ist, dessen glatter Rand (311) mit dem Gewinde (122) der Hülse (120) zusammenwirkt.

13. Einheit nach vorausgehendem Anspruch, bei der die Aufnahme des ersten Teils (200) von einer zylinderförmigen Wand (210) abgegrenzt wird, die eine in den Rand (211) des Langloches mündende Nut (211A) aufweist, wobei diese Nut (211A) eine elastische Feder (214) aufnimmt, die mit am Betätigungskopf (110) des Verbindungselements (100) vorgesehenen Gestaltungen zusammenwirken kann, um die Positionen für Lösen und Spannen des Verbindungselements zu indizieren.

14. Einheit nach einem der Ansprüche 12 und 13, bei der die Aufnahme des ersten Teils (200) durch eine zylinderförmige Wand (210) abgegrenzt ist, die hervorstehend einen Kontakt (213) trägt, welcher für eine Seite mit auf dem Betätigungskopf des Verbindungselements vorgesehenen Gestaltungen einen Anschlag bildet, um die Positionen für Lösen und Spannen des Verbindungselements zu indizieren.

15. Einheit nach einem der Ansprüche 12 bis 14, bei der das erste Teil (200) eine Frontplatte und das zweite Teil (300) eine Halterung für einen Anschlusskasten ist.

## Claims

1. A fastener element (100) for fastening together two parts (200, 300), the fastener element comprising a driver head (110) that presents a bearing surface (111) for bearing against the first part (200) to be fastened, and a shaft (120) that extends from the bearing surface (111) along a longitudinal axis (X), and that is provided with a thread (122) that winds around the longitudinal axis (X), the fastener element being **characterized in that** the thread (122) includes a notch (123) that presents a blocking surface (123A), for bearing against the second part (300) to be fastened, that faces towards the driver head, and that extends parallel to said bearing surface (111).

2. A fastener element (100) according to claim 1, wherein said notch (123) presents a right-angled cross-section.

3. A fastener element (100) according to claim 1 or claim 2, wherein said notch (123) is formed in a zone of the thread (122) that is situated in the proximity of the driver head (110).

4. A fastener element (100) according to any preceding claim, wherein the thread (122) includes two identical notches (123) that are arranged in symmetrical manner about the longitudinal axis (X) of the shaft (120).

5. A fastener element (100) according to any preceding claim, which fastener element includes indexer means that are suitable for indicating loose and tight positions of said fastener element.

6. A fastener element (100) according to the preceding claim, wherein the driver head (110) includes an outer cylindrical surface having an axis that is the longitudinal axis of the shaft, this outer cylindrical surface being provided with arrangements (113A, 113B, 114, 115) that are positioned angularly in determined manner, such that each of them is adapted to co-operate with a counterpart of the first part (200) so as to index said loose and tight positions of said fastener element.

7. A fastener element (100) according to the preceding claim, wherein said arrangements comprise two projecting splines (113A, 113B) that extend parallel to the longitudinal axis (X) of the shaft (120), and that are angularly spaced apart from each other by a determined angle that depends on the tightening angle of the fastener element.

8. A fastener element (100) according to the preceding claim, wherein said outer cylindrical surface of the driver head includes notches (114, 115) that are arranged diametrally opposite the splines (113A, 113B), and that indicate the loose and tight positions of the fastener element.

9. A fastener element (100) according to any preceding claim, wherein the thread (122) winds around the longitudinal axis of the shaft in such a manner that the fastener element (100) is a quarter-turn screw.

10. A fastener element (100) according to any preceding claim, which fastener element includes snap-fastener means for mounting it on the first part.

11. A fastener element (100) according to the preceding claim, wherein said snap-fastener means include a bulge (124) that projects from the outer surface of the shaft.

12. An assembly comprising a first and a second parts (200, 300) that are assembled together by means of at least one fastener element (100) according to any preceding claim, the first part (200) including a reception housing for receiving the driver head (110) of said fastener element (100), said reception housing having a bottom (210A) that is perforated with an oblong opening through which the shaft (120) passes, and the second part (300) including a corresponding reception housing for receiving the shaft (120) of said fastener element (100), said corresponding reception housing having a bottom (310A) that is perforated with an oblong opening having a smooth peripheral edge (311) that cooperates with the thread (122) of said shaft (120).

13. An assembly according to the preceding claim, wherein the reception housing for receiving the first part (200) is defined by a cylindrical wall (210) that includes a notch (211A) that opens out onto the peripheral edge (211) of the oblong opening, the notch (211A) housing a resilient tab (214) that is adapted to co-operate with arrangements provided on the driver head (110) of the fastener element (100) so as to index the loose and tight positions of said fastener element.

14. An assembly according to claim 12 or claim 13, wherein the reception housing for receiving the first part (200) is defined by a cylindrical wall (210) that carries a projecting lug (213) that forms an abutment for a face of arrangements provided on the driver head of the fastener element so as to index the loose and tight positions of said fastener element.

15. An assembly according to any one of claims 12 to 14, wherein the first part (200) is a front panel, and the second part (300) is a support for supporting an electrical box.
